Europäisches Patentamt

European Patent Office

Office européen des brevets

(11) Publication number: **0 041 485**
**B1**

(12) **EUROPEAN PATENT SPECIFICATION**

(45) Date of publication of patent specification: **27.12.84**

(21) Application number: **81830084.0**

(22) Date of filing: **27.05.81**

(51) Int. Cl.³: **A 47 J 31/46,** A 47 J 31/56, G 05 D 7/01

(54) **Device for drawing off and replenishing water in the boiler of an espresso coffee machine.**

(30) Priority: **02.06.80 IT 2249380**

(43) Date of publication of application:
**09.12.81 Bulletin 81/49**

(45) Publication of the grant of the patent:
**27.12.84 Bulletin 84/52**

(84) Designated Contracting States:
**AT BE CH DE FR GB LI NL SE**

(56) References cited:
**DE-A-2 832 962**
**FR-A-2 315 892**
**GB-A- 920 837**

(73) Proprietor: **Nuova Faema S.p.A.**
**15, via Ventura**
**I-20134 Milan (IT)**

(72) Inventor: **Fomasi, Eugenio**
**Via Dante 46**
**Brugherio (Milano) (IT)**

(74) Representative: **Perani, Aurelio et al**
**c/o JACOBACCI-CASETTA & PERANI S.p.A 7,**
**Via Visconti di Modrone**
**I-20122 Milano (IT)**

Courier Press, Leamington Spa, England.

## Description

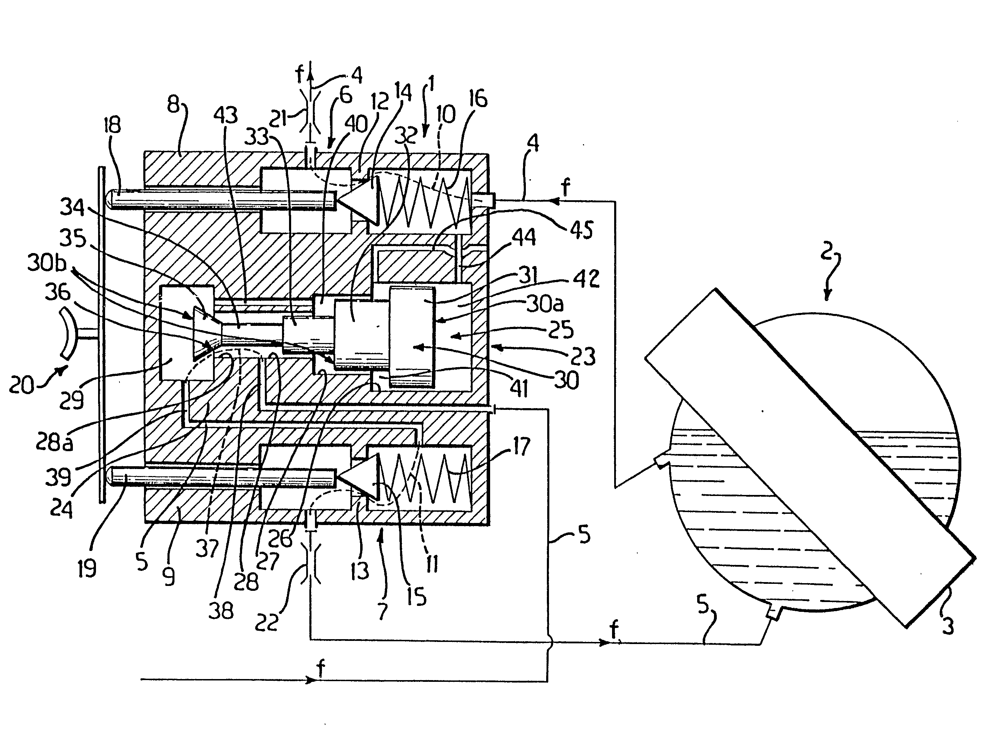

The present invention relates to a device for drawing off and replenishing water in a boiler of an espresso coffee machine. More particularly, the device is of the type where the drawing off and replenishing of the water are effected via a draw off cock and a filling cock placed respectively in an outlet pipe for water leaving the boiler and in an inlet pipeline for water coming from the mains supply to the boiler, the cocks being controlled to open simultaneously.

As it is known, when water is drawn from the boiler via the draw off cock the replenishment of the boiler is simultaneously assured by a corresponding input of water from the mains supply via the filling cock.

An example of such a type prior art is shown in the French patent publication No. 2,315,892. This publication discloses a device comprising a draw off cock and a filling cock which can be operated also simultaneously so that the replenishment of the boiler can be carried out at each drawing off of hot water.

Moreover, the same known device according to the French publication No. 2,315,892, comprises a first calibrated constriction placed in the outlet pipe and a second calibrated constriction placed in the inlet pipe for controlling the water flow in each respective pipe.

Although as a general rule the known devices currently in use have the advantage of avoiding rapid emptying of the boiler, they suffer from the drawback of not being able to guarantee a constant water level in the boiler. In fact with known devices the water level will slowly increase during periods of high mains water pressure and will slowly decrease during periods of low mains water pressure. In the first case, after the boiler has been operating for a certain period it becomes completely flooded with water, which results in the so called steam service being compromised; in the second case water drains completely from the boiler, giving rise to the possibility of overheating and burnout of the electric resistance elements which become exposed.

In the known coffee machines currently in use the operator has, therefore, to keep a strict check on the water level in the boiler so that he may take action as necessary by opening the draw off cock, or the filling cock until the water level in the boiler is brought to the desired value. The devices in use are therefore scarcely reliable in that they require periods of corrective intervention on the part of the operator, failing which the drawbacks cited above could be experienced.

The problem forming the basis of the present invention is that of devising a device of the specified type which has such structural and operational characteristics that the said drawbacks may be overcome.

The innovative idea forming the basis of the present invention lies in reducing the pressure of the water coming from the mains supply and in maintaining this reduced pressure constant at a value having a predetermined relation to the boiler pressure, for example at a value which is double the pressure of the water in the boiler, regardless of pressure variation in the mains supply.

Thus, according to the present invention, there is provided a device for drawing off and replenishing water in a boiler of an espresso coffee machine comprising a draw off cock and a filling cock placed respectively in the water outlet pipe from the boiler and in the water inlet pipe coming from the mains supply to the boiler, these cocks being controlled to open simultaneously, a first constriction in the outlet pipe and a second constriction in the inlet pipe, characterized by the fact that said first constriction has a resistance set in accordance with a desired outlet delivery of water, that said constriction has a resistance set into a predetermined relation to that of the first constriction, and that it further includes a valve in the inlet pipe upstream of said second constriction, said valve comprising a valve body and a slider which is movably guided in the body and defines therewith a restricted port for the passage of water to the boiler, said slider having a first surface which is so subject to the pressure of the water upstream of the second constriction that the slider is urged by this pressure in a direction to reduce the size of said restricted port, and a second surface which is so subject to the pressure of water in the boiler that the slider is urged by this pressure in a direction to increase the size of said port, the relative areas of said first and second surfaces being such that with both cocks open, the slider takes up an equilibrium position in which the said port is so sized that the water pressure immediately upstream of the second constriction assumes a value which is in predetermined relation to the boiler water pressure and results in the flow through said second constriction equally that through the first constriction.

Further characteristics and advantages of the device according to the present invention will become apparent from the following description of a preferred embodiment given by way of non-limiting example with reference to the single attached figure which shows a sectional diagrammatic view of a device according to the present invention.

With reference to the attached figure, by 1 is indicated in its entirety a device for drawing off and replenishing water in a boiler 2 of a machine for the production of espresso coffee (this machine is not shown as it is of conventional type).

The boiler 2 is provided in a conventional manner with heating means, not shown, for heating the water contained therein and for the production of steam. The boiler 2 is traversed by one or more coffee units 3, of conventional type, for the production of espresso coffee.

The boiler is provided with a water outlet pipe 4 for drawing off hot water, and a water inlet pipe 5, fed from the mains supply, for filling the boiler.

The device 1 comprises a draw off cock 6 placed in the outlet pipe 4, and a filling cock 7 placed in the inlet pipe 5. The said cocks 6 and 7 are substantially alike. In particular each cock comprises a valve body 8, 9; a fluid path 10, 11 in this body 8, 9; a valve seat 12, 13; and a valve closure member 14, 15 movable to and away from this seat 12, 13. The valve closure member 14, 15 is urged in the direction of closure by a spring 16, 17 and is displaceable in the direction of opening, against the force of the spring 16, 17 by means of a push rod 18, 19.

Hand operated means, shown diagrammatically by 20 and of known type, are provided for simultaneous control of both push rods 18, 19, to thereby effect the opening of both the cocks 6 and 7.

The device 1 further comprises a first constriction 21, placed in the outlet pipe 4, downstream of draw off cock 6, as well as a second constriction 22, placed in the inlet pipe 5, downstream of filling cock 7. The constrictions 21 and 22 are adjustable. In particular the resistance of the constriction 21 is adjusted in accordance with a required outlet delivery of water, whilst the resistance of the constriction 22 is adjusted so as to equal the resistance of the constriction 21.

The device 1 further comprises a valve 23, placed in the inlet pipe 5 upstream of the constriction 22 and the cock 7, and intended to reduce the pressure of the water drawn from the mains supply and keep the value of this reduced pressure constantly equal to double the pressure of the water in the boiler.

The valve 23 comprises a valve body 24, which preferably forms a single body with the bodies 8 and 9 of the cocks 6 and 7; a seat 25 is defined in the valve body 24 and is constituted by three consecutive coaxial cylindrical sections 26, 27 and 28 which have respective cross sections of decreasing area, A1, A2, A3. The section 28 of least area opens into a cavity 29. The area A1 has double the value of area A2.

A slider 30 is movably guided in the valve seat 25 and is formed by three coaxial cylindrical sections 31, 32, 33, which respectively slide in sealed fashion in the sections 26, 27 and 28 of the seat 25. The slider 30 is coaxially provided, in correspondence with its section 33, with an appendage 34 which has a mushroom shaped end 35. The end 35 extends into the cavity 29 and defines with the edge 28a of the section 28, a restricted port 36 which provides an outlet into the cavity 29 for water passing along a water path 37 extending through the section 28 and the cavity 29 between an inlet orifice 38 and an outlet orifice 39. This restricted port brings about a reduction in pressure in the water supplied from the mains supply.

Defined between the slider 30 and the valve body 24, are a first annular chamber 40 having an area equal to A2—A3, a second annular chamber 41 having an area equal to A1—A2, and a cylindrical chamber 42 having an area A1.

This first annular chamber 40 is in fluid communication with the cavity 29 via a duct 43, the second chamber 41 is in communication with the atmosphere through a duct 45; the chamber 42 is in fluid communication with the boiler through a duct 44 and the section of the pipe 4 which is upstream of the constriction 21.

In this manner the slider 30 has a first surface 30a — formed by its end facing the chamber 42 and having an area A1 — urged by the pressure of the boiler in a direction which causes an increase in size of the restricted port 36, as well as a second surface 30b — formed by the mushroom-shaped end part 35 and by the part facing the chamber 40, of overall area equal to A2 — urged by the pressure downstream of the port 36 in a direction which causes a reduction in size of the said port.

The operation of the devce is described below with reference to the condition where the cocks 6 and 7 are both open.

In this condition the water flows through pipes 4 and 5 in the direction of arrow f. The water drawn from the mains supply at a pressure of $P_{mains}$ passes through the restricted port 36 so that its pressure is reduced to a reduced value $P_r$. In the steady-state of equilibrium of the slider 30 the reduced pressure $P_r$ is of a value equal to double the pressure of the boiler $P_{boiler}$, regardless of the mains supply pressure.

The water drawn from the mains supply then passes through the constriction 22, upstream of which the pressure equals $2 \cdot P_{boiler}$. Since the change in pressure across the constriction 22 equals $P_{boiler}$ and is therefore equal to the value of the pressure across the constriction 21, and since the resistance of the constriction 22 is so adjusted as to be equal to that of the constrictions 21, it therefore follows that the water flow replenishing the boiler is equal to the water flow which is being drawn off therefrom.

When the pressure of the water in the boiler varies, or the pressure of water from the mains supply varies, the slider 30 will be displaced in the valve body 24 until it reaches a new position of equilibrium in which the new size of the restricted port 36 is such that it sets and maintains the reduced pressure at a value double that of the boiler pressure.

The main advantage of the device according to the invention lies in the fact that it guarantees maintenance of water level in the boiler even after numerous and prolonged operations of drawing off water and even when there are variations in the mains supply pressure and the pressure in the boiler.

## Claims

1. A device for drawing off and replenishing water in a boiler (2) of an espresso coffee machine, comprising a draw off cock (6) and a filling cock (7) placed respectively in the water outlet pipe (4) from the boiler (2) and in the water inlet pipe (5) coming from the mains supply to the boiler (2), these cocks (6, 7) being controlled to open simultaneously, a first constriction (21) in the outlet pipe (4) and a second constriction (22) in the inlet pipe (5), characterized by the fact that said first constriction (21) has a resistance set in accordance with a desired outlet delivery of water, that said second constriction (22) has a resistance set into a predetermined relation to that of the first constriction (21) and that it further includes a valve (23) in the inlet pipe (5) upstream of said second constriction (22), said valve (23) comprising a valve body (24) and a slider (30) which is movably guided in the body (24) and defines therewith a restricted port (36) for the passage of water to the boiler (2), said slider (30) having a first surface (30a) which is so subject to the pressure of the water upstream of the second constriction (22) that the slider (30) is urged by this pressure in a direction to reduce the size of said restricted port (36) and a second surface (30b) which is so subject to the pressure of water in the boiler (2) that the slider (3) is urged by this pressure in a direction to increase the size of said port (36), the relative areas of said first and second surfaces (30a, 30b) being such that with both cocks (6, 7) open, the slider (30) takes up an equilibrium position in which the said port (36) is so sized that the water pressure immediately upstream of the second constriction (22) assumes a value which is in predetermined relation to the boiler water pressure and results in the flow through said second constriction (22) equalling that through the first constriction (21).

2. A device according to Claim 1, characterised in that the resistance of the second constriction (22) is equal to that of the first constriction (21) and in that the area of said second surface (30b) is equal to twice the area of said first surface (30a) whereby the water pressure immediately upstream of said second constriction (22) assumes a value equal to twice the boiler water pressure upon opening of said cocks (6, 7).

## Patentansprüche

1. Vorrichtung zur Entnahme und Wiederauffüllung von Wasser im Kessel (2) einer Espresso-Kaffeemaschine, mit einem Entnahmehahn (6) und einem Füllhahn (7), die im Wasserauslaßrohr (4) des Kessels bzw. Im Wassereinlaßrohr (5), das von der Wasserversorgung des Kessels (2) kommt, angeordnet sind, wobei die beiden Hähne (6, 7) so regelbar sind, daß sie gleichzeitig öffnen, mit einer ersten Verengung (21) im Auslaßrohr (4) und einer zweiten Verengung (22) im Einlaßrohr (5), dadurch gekennzeichnet, daß die erste Verengung (21) einen Strömungswiderstand besitzt, welcher entsprechend der erwünschten Wasserauslaßmenge eingestellt ist, daß die zweite Verengung (22) einen Widerstand mit einem vorgegebenen Verhältnis zum Widerstand der ersten Verengung aufweist, und daß sie ein Ventil (23) im Einlaßrohr (5) stromaufwärts von der zweiten Verengung (22) besitzt, das einen Ventilkörper (24) und ein Gleitstück (30) aufweist, welches beweglich im Körper (24) geführt ist und mit diesem eine begrenzte Öffnung (36) für den Durchfluß des Wassers zum Kessel (2) umgrenzt, und daß das Gleitstück (30) eine erste Oberfläche (30a) besitzt, auf die der Druck des Wassers stromaufwärts von der zweiten Verengung (22) derart wirkt, daß sich das Gleitstück (30) in jene Richtung bewegt, in der die begrenzte Öffnung (36) verkleinert wird, und eine zweite Oberfläche (30b) besitzt, auf die der Wasserdruck im Kessel (2) derart wirkt, daß das Gleitstück (30) durch diesen Druck so verschoben wird, daß sich die Größe dieser Öffnung (36) erweitert, wobei die jeweiligen Flächen für die erste und die zweite Oberfläche (30a, 30b) so bemessen sind, daß bei geöffneten beiden Hähnen (6, 7) das Gleitstück (30) eine Gleichgewichtsstellung einnimmt, in der die Öffnung (36) so groß ist, daß der Wasserdruck unmittelbar stromaufwärts der zweiten Verengung (22) einen Wert annimmt, der in einem vorbestimmten Verhältnis zum Wasserdruck im Kessel steht, und bewirkt, daß der Fluß durch die zweite Verengung (22) gleich ist jenem durch die erste Verengung (21).

2. Vorrichtung nach Anspruch 1, dadurch gekennzeichnet, daß der Strömungswiderstand der zweiten Verengung (22) dem der ersten Verengung (21) gleicht und daß die Fläche der zweiten Oberfläche (30b) gleich der doppelten Fläche der ersten Oberfläche (30a) ist, wobei der Wasserdruck unmittelbar stromaufwärts von der genannten Verengung (22) bei Öffnen der Hähne (6, 7) eine Wert annimmt, der doppelt so groß ist wie der Wasserdruck im Kessel.

## Revendications

1. Dispositif pour soutirer et ajouter de l'eau dans une chaudière (2) d'une machine à café express, comprenant un robinet de prélèvement (6) et un robinet de remplissage (7) placés respectivement dans la conduite d'entrée d'eau (4) de la chaudière (2) et dans la conduite d'entrée d'eau (5) allant de la conduite de distribution d'eau à la chaudière, ces robinets (6, 7) étant commandés de manière à s'ouvrir simultanément, un premier étranglement (21) dans la conduite de sortie (4) et une second étranglement (22) dans la conduite d'entrée (5), caractérisé par le fait que le premier étranglement (21) présente une résistance réglée en fonction d'un débit de sortie d'eau souhaité, que le second étranglement (22) présente une résistance réglée de manière à présenter une relation prédéterminée avec celle du premier étranglement (21) et qu'il comprend, en outre, une valve (23) dans la conduite d'entrée (5) en amont du second étranglement (22), cette valve (23) comprenant un corps (24) et un piston-valve (30) qui est guidé de façon mobile dans le corps (24) et qui définit avec celui-ci une lumière étranglée (36) pour le passage de l'eau vers la chaudière (2), les piston-valve (30) comportant une première surface (30a), qui est exposée à la pression de l'eau en amont du second étranglement (22) d'une manière telle que ce piston-valve (30) soit sollicité par cette pression dans une direction visant à réduire la dimension de la lumière étranglée (36), et une seconde surface (30b) qui est exposée à la pression de l'eau dans la chaudière (2) d'une manière telle que le piston-valve (30) soit sollicité par cette pression dans une direction visant à augmenter la dimension de la lumière (36), les aires relatives de la première et de la seconde surface (30a, 30b) étant telles que, lorsque les deux robinets (6, 7) sont ouverts, le piston-valve prend une position d'équilibre, dans laquelle la dite lumière (36) est calibrée de telle sorte que la pression d'eau immédiatement en amont du second étranglement (22) prenne une valeur qui se trouve dans une relation prédéterminée avec la pression d'eau de la chaudière et rend le débit qui passe par le second étranglement (22) égal à celui qui passe par la premier étranglement (21).

2. Dispositif suivant la revendication 1, caractérisé en ce que la résistance du second étranglement (22) est égale à celle du premier étranglement (21) et l'aire de la seconde surface (30b) est égale au double de celle de la première surface (30a), de sorte que la pression d'eau immédiatement en amont du second étranglement (22) prend une valeur égale au double de la pression d'eau de la chaudière lors de l'ouverture des robinets (6, 7).